Europäisches Patentamt

(19) **European Patent Office**

**Office européen des brevets**

(11) Numéro de publication: **0 159 933**
**A2**

(12) # DEMANDE DE BREVET EUROPEEN

(21) Numéro de dépôt: 85400665.7

(22) Date de dépôt: 03.04.85

(51) Int. Cl.⁴: **G 01 N 27/90**

(30) Priorité: 05.04.84 FR 8405364

(43) Date de publication de la demande: 30.10.85
Bulletin 85/44

(84) Etats contractants désignés: **AT BE CH DE GB IT LI NL SE**

(71) Demandeur: **SOCIETE NATIONALE DES CHEMINS DE FER FRANCAIS, 88, rue Saint-Lazare, F-75436 Paris Cedex 09 (FR)**
Demandeur: **COMMISSARIAT A L'ENERGIE ATOMIQUE Etablissement de Caractère Scientifique Technique et Industriel, 31/33, rue de la Fédération, F-75015 Paris (FR)**

(72) Inventeur: **Prasil, Bernard, 229 faubourg Saint-Honoré, F-75008 Paris (FR)**
Inventeur: **Spriet, Bernard Tour d'Aygosi, Bât. 31 Route de Nice 65 Cours Gambetta, F-13100 Aix-En-Provence (FR)**
Inventeur: **Stossel, Alain Les Hauts de Provence, Bâtiment E Avenue A. Capus, F-13100 Aix-En-Provence (FR)**

(74) Mandataire: **CABINET BONNET-THIRION, 95 Boulevard Beaumarchais, F-75003 Paris (FR)**

(54) **Dispositif de repérage de défauts de rails de chemin de fer par courants de Foucault, capable de discriminer les défauts de certaines discontinuités de contruction des rails.**

(57) Le dispositif comprend, sur un chariot (2) guidé le long du rail un premier jeu de bobines (41, 42) superposées, couplées inductivement à la surface de roulement du rail (1), et insérées dans un pont de mesure d'impédance (4), et un second jeu de bobines (51, 52) disposées symétriquement de part et d'autre du plan vertical de symétrie du rail (1), et insérées dans un second pont de mesure d'impédance (5). Les bobines (41 et 42) forment un capteur de courants de Foucault sensible à toutes les irrégularités de la surface de roulement, tandis que le capteur formé par la paire (51, 52) sera sensible uniquement à celles des irrégularités qui ne présentent pas de symétrie par rapport au plan vertical de symétrie du rail. Les empreintes de patinage sont de ce type. La combinaison, dans le processeur (7) des données issues des ponts (4 et 5) permet de distinguer les défauts des discontinuités de structure du rail, en complément des informations issues d'autres capteurs, par exemple à ultrasons. En alimentant le pont (5) avec deux fréquences, et en faisant une soustraction pondérée des signaux de mesure du pont (5), on augmente la capacité de discrimination des défauts vis-à-vis de certaines discontinuités.

## Dispositif de repérage de défauts de rails de chemin de fer par courants de Foucault, capable de discriminer les défauts de certaines discontinuités de construction des rails

L'invention se rapporte à un dispositif pour le repérage de défauts de la surface de roulement de rails de chemin de fer, qui comprend, par rail, un chariot capteur déplaçable le long de ce rail, équipé de moyens de guidage pour le maintenir en position relative constante par rapport à la surface de roulement lissée, et portant des moyens d'auscultation du rail.

Parallèlement aux améliorations techniques de la superstructure des voies ferrées, portant sur les processus d'élaboration des aciers à rail, le laminage, l'utilisation de longs rails soudés, qui ont permis, conjointement avec la mise au point de nouveaux matériels, de porter les vitesses de circulation, en service commercial, bien au-delà de 200 km/h, on a amélioré les processus de contrôle de l'état des voies ferrées, destinés à déceler de façon précoce les défauts dans les rails, afin d'exécuter les travaux d'entretien nécessaires au stade de l'évolution de ces défauts où le risque de rupture est pratiquement nul.

Pendant longtemps le contrôle de l'état des rails a été effectué par des équipes qui se déplaçaient le long de la voie, et ne relevaient que les défauts de rails visibles de l'extérieur. Les différents progrès techniques, et les contrôles systématiques des rails en atelier ont pratiquement éliminé la majeure partie de ces défauts. Les défauts subsistants sont essentiellement dus à l'évolution de défauts internes de fatigue, s'amorçant sur des microfissures d'origines diverses (inclusions ou flocons d'hydrogène).

En 1953, une voiture équipée pour l'auscultation des rails par sondage électromagnétique a été mise en service ; elle permettait de mettre en évidence des fissurations internes avec une certaine fiabilité et un certain rendement. Vers les années 1964-1968, l'auscultation par ultrasons remplaçait l'auscultation électromagnétique, avec une fiabilité et un rendement nettement supérieurs.

Toutefois la sensibilité accrue des mesures, qui permet une détection plus précoce des fissurations, a entraîné parallèlement le souci de distinguer les défauts de fissuration interne, qui ont pour origine des inclusions, de fissures qui se développent à partir d'empreintes de patinage formées sur la surface de roulement du champignon de rail.

On notera que ces empreintes de patinage sont bien distinctes des détériorations de voies dues à la perte d'adhérence d'essieux moteurs au démarrage. Il s'agit d'un patinage qui se produit en circulation en pleine vitesse, probablement lorsqu'une roue, à l'extrémité d'un essieu siège d'un couple de torsion élevé, subit une perte d'adhérence transitoire. L'énergie de torsion, dégradée dans le patinage, provoque une élévation locale intense de température, suivie d'un refroidissement rapide par diffusion de l'énergie thermique dans la masse du champignon. Il se forme ainsi une lentille de martensite, fragile, qui est susceptible de s'écailler et d'amorcer de petites. fissures dans le champignon. Ces empreintes de patinage, surtout lorsqu'elles sont écaillées, constituent des anomalies de propagation pour les ultrasons.

On signalera que la distinction entre fissures internes et empreintes de patinage revêt une grande importance pratique, étant donné que la sécurité exige qu'une fissuration interne entraîne le remplacement de la totalité du rail affecté, tandis qu'une empreinte de patinage peut se réparer, soit par un rechargement du champignon de rail suivi d'un meulage, soit, dans les cas graves, par le remplacement d'un coupon de rail.

On trouvera un exposé détaillé de tout ce qui précède dans l'article : "25 ans de contrôle des rails à la S.N.C.F.", P. Lachaze et B. Prasil, Revue Générale des Chemins de Fer, N° 99, Avril 1980, pages 211-222.

Pour lever l'indétermination entre défauts de fatigue internes et empreintes de patinage, que laisse subsister l'auscultation par ultrasons en déplacement, on a proposé d'y associer une auscultation par courants de Foucault. On a effectué des essais en insérant dans une branche d'un pont d'impédance, alimenté par une tension alternative, une bobine couplée inductivement à la face supérieure du champignon de rail. A la fréquence d'alimentation du pont, les courants induits par la bobine dans le rail sont pratiquement localisés dans une couche superficielle mince du champignon, dont l'épaisseur est dite épaisseur de peau, proportionnelle comme on le sait à la racine carrée du quotient de la résistivité électrique du métal par sa perméabilité magnétique.

Le pont est réglé à l'équilibre pour le rail normal et sain. Des variations de la résistivité du métal du rail, de sa perméabilité, et de la distance entre la bobine et la surface du rail se traduiront par un déséquilibre du pont. Comme on le sait le signal de déséquilibre ou signal de mesure est un signal sinusoïdal complexe, au sens que donnent à cette expression les électriciens. Un signal complexe contient deux paramètres indépendants, ou vectoriellement orthogonaux, que l'on peut exprimer en module et phase, ou en composantes en quadrature, notamment. L'équilibre du pont, d'ailleurs, suppose un couple de conditions indépendantes.

Pour déterminer des composantes orthogonales du signal de déséquilibre, on pourra recourir à une double détection synchrone avec deux signaux de référence en quadrature convenablement calés en phase sur la tension d'alimentation du pont. On notera qu'en appliquant ces composantes détectées aux entrées de déviation X et Y d'un afficheur visuel on aura une représentation du signal de déséquilibre en vecteur dans le plan complexe.

Quel que soit le mode d'expression des deux paramètres de signal complexe, il est nécessaire de se référer à une origine de phase, liée à la tension d'alimentation. Le choix de l'origine des phases sera tel que la physionomie particulière de certaines discontinuités apparaisse clairement. En gros, les discontinuités font varier, et la puissance absorbée par le rail (variation de pertes), et la puissance réfléchie par ce rail (variation de couplage). A ces variations de pertes et de couplage correspondent des composantes active et réactive. Un choix approprié de l'origine des phases amènera les composantes en quadrature détectées à coïncider avec ces composantes active et réactive. On conçoit que des variations de résistivité du rail se traduiront par une variation de pertes, et que des variations de distance entre bobine et rail, celui-ci présentant des dépressions, se traduiront par des variations de couplage.

Une variation de la perméabilité magnétique du métal du rail induira simultanément une variation de couplage, et une variation de pertes, étant donné que l'épaisseur de peau est inversement proportionnelle à la racine carrée de la perméabilité.

Bien entendu ceci n'est qu'une approximation, et il se révélera souvent expérimentalement que le choix d'une origine de phase différente, par exemple la phase moyenne d'une discontinuité d'un certain type, peut permettre une identification de défaut nettement plus fiable.

Dans la pratique, toutes les irrégularités du rail, discontinuités de structure et défauts se traduiront par des variations de couplage et des variations de pertes, chaque type d'irrégularité présentant toutefois un caractère propre avec des gammes d'amplitudes de composantes active et réactive particulières. Ceci, joint au défilement du capteur le long du rail qui met en évidence la longueur de la discontinuité, et à l'évolution de la discontinuité suivant la longueur du rail, donne un signal complexe dont l'évolution dans le temps constitue une sorte de signature de la discontinuité.

Bien entendu, le signal de déséquilibre est affecté d'un bruit de fond dû d'une part aux irrégularités aléatoires du rail sans incidence sur sa fiabilité, et d'autre part aux irrégularités de guidage du capteur par rapport au rail. On comprendra que le guidage du capteur sur le rail est déterminé en hauteur par des roues portant sur le rail de part et d'autre du capteur, et transversalement par l'appui d'un galet. Les irrégularités du rail au contact des organes de guidage sont transmises en composition au capteur, pour se combiner aux irrégularités du rail en regard du capteur. On éliminera le bruit de fond par des filtres ou des dispositifs à seuil. Ceci équivaut à un lissage du signal de déséquilibre, qui se rapporte dès lors à un rail idéal, ou lissé.

Toutefois il est apparu que la discrimination entre les empreintes de patinage et certaines discontinuités de construction du rail était encore insuffisante pour permettre un traitement "en temps réel" des informations procurées par l'auscultation par courants de Foucault. En effet l'empreinte de patinage donne un signal bref, dont les composantes active et réactive peuvent varier en rapport et amplitudes de façon notable, en fonction de l'état d'évolution du défaut. La lentille de martensite qui se forme au départ n'induit que peu de variations de couplage, le rail n'étant pas géométriquement altéré. L'écaillage consécutif au passage des roues sur la martensite fragile élimine progressivement le matériau dont la résistivité et la perméabilité ont été modifiées, en laissant une dépression, source d'une variation de couplage, compliquée d'amorces de fissures qui modifient la résistivité apparente de l'acier en surface.

L'invention a pour objectif d'améliorer la discrimination entre les irrégularités du rail décelées par courants de Foucault, et propose à cet effet un dispositif pour le repérage de défauts de la surface de roulement de rails de chemin de fer, ceux-ci présentant, en outre, des discontinuités de structure, dispositif comprenant, par rail, un chariot capteur déplaçable le long de ce rail, équipé de moyens de guidage pour le maintenir en position relative constante par rapport à la surface de roulement lissée, et portant au moins une bobine inductivement couplée à la surface de roulement et insérée dans une branche d'un pont d'impédance alimenté sur une première diagonale par une tension alternative à fréquence choisie, et réglé à l'équilibre en sorte de délivrer sur la seconde diagonale, en réponse à une irrégularité du rail, un signal d'écart complexe dépendant des variations de couplage et de charge induites dans la bobine par l'irrégularité, et des moyens de détection, branchés sur la seconde diagonale du pont et aptes à délivrer des paires de signaux représentatifs des variations précitées, afin de permettre de distinguer, par comparaison avec des valeurs typiques résultant d'irrégularités déterminées, dans ces irrégularités celles qui sont des défauts de celles qui sont des discontinuités de structure, dispositif caractérisé en ce qu'il comporte deux ponts d'impédance, un premier pont avec une bobine, qui sera dite ci-après bobine principale, centrée dans le plan vertical de symétrie du rail, et le second avec une paire de bobines, qui seront dites ci-après différentielles, insérées respectivement dans deux branches adjacentes du pont disposées symétriquement de part et d'autre du plan de symétrie précité en couvrant ensemble la même surface de rail que la bobine principale et à distance de celle-ci faible mais suffisante pour que le couplage entre ponts soit négligeable, les paires de signaux représentatifs issus des moyens de détection branchés sur l'un et l'autre ponts étant dirigées conjointement sur des moyens de traitement aptes à les comparer à des valeurs enregistrées typiques d'irrégularités, soit défauts, soit discontinuités de structure.

Les Demanderesses ont mis en évidence que la largeur de rail sur laquelle vient en contact la jante d'une roue représente moins de la moitié de la largeur effective du rail, le contact entre jante de la roue et champignon de rail se déplaçant sur cette largeur effective dans le processus de guidage de l'essieu sur la voie, obtenu par la conicité des jantes des roues de l'essieu. Il en résulte que les empreintes de patinage n'occupent qu'une largeur réduite du champignon et ne sont qu'exceptionnellement centrées sur le champignon, d'autant que la ligne centrale moyenne du contact du champignon et de la jante est décalée par rapport au plan vertical de symétrie du rail. Par contre la plupart des discontinuités de construction des rails intéressent toute la largeur du rail, soit localement (soudures, joints notamment), soit par variations progressives (aiguilles, coeurs de croisement). Les appareils de dilatation se présentent comme une discontinuité symétrique bordée de deux discontinuités asymétriques franches, de sens opposés. On précise que, si l'on parle ici de plan vertical de symétrie du rail pour le plan qui passe par le patin, l'âme et le champignon, et qui serait vertical si le patin était posé sur une surface horizontale, ce plan de symétrie n'est, sur une voie, que très approximativement vertical, d'une part parce que les traverses sont souvent inclinées pour relever le rail extérieur dans les courbes, et que les surfaces d'appui des patins sur les traverses sont en pentes descendantes vers le centre de la traverse.

La conjonction des informations obtenues par les mesures effectuées par le premier pont à bobine principale, et le second pont à bobines différentielles autorise donc un classement plus fin des irrégularités, pour distinguer notamment les empreintes de patinage de discontinuités de construction.

On remarquera que l'affinement de classement apporté par le
pont à bobines différentielles est obtenu pour l'essentiel en
binaire, la distinction s'effectuant par la reconnaissance du
caractère symétrique ou non de l'irrégularité. Or il est clair
que le pont à bobines différentielles possède une sensibilité
moindre que le pont à bobine principale.

De préférence le dispositif comporte une bobine de compensation insérée dans une branche du premier pont adjacente à
celle où est insérée la bobine principale. Cette bobine est
disposée dans le chariot capteur au-dessus de la bobine principale. Cette bobine de compensation est placée ainsi en sorte
d'être peu couplée au rail, la bobine principale formant plus
ou moins écran, mais d'être soumise à tous les effets parasites (induction du courant de traction, des courants de signalisations, notamment) pratiquement dans les mêmes conditions
que la bobine principale, ce qui permet une compensation au
premier ordre de ces effets parasites.

Selon un développement de l'invention, le dispositif pour
distinguer un défaut à caractère asymétrique d'une discontinuité de structure de type particulier présentant un caractère
asymétrique, est caractérisé en ce que le second pont est alimenté sur sa première diagonale par une somme de deux tensions
à fréquence distinctes, deux ensembles de moyens détecteurs
sensibles respectivement à l'une et l'autre fréquences étant
branchés dans la seconde diagonale.

Les appareils de voie, qui présentent de construction un
caractère asymétrique, présentent de nature un comportement en
fréquence prévisible et reproductible, et se distinguent en
cela des empreintes de patinage dont le comportement en fréquence est dans chaque cas particulier.

Aussi en disposition préférée les paires de signaux représentatifs sont appliquées conjointement à des moyens différentiels avec des amplitudes réglées en sorte que la paire de
signaux représentatifs en sortie soit nulle pour une discontinuité de structure de type particulier.

De préférence les chariots correspondant aux deux rails
de voie sont couplés mécaniquement, afin que le guidage latéral des chariots ne soit pas perdu au franchissement des traversées.

8        0159933

De préférence les moyens de traitement des signaux comportent, en entrée des signaux représentatifs, des convertisseurs analogiques/numériques. Ces convertisseurs font interface entre les dispositifs de mesure proprement dits, et les moyens d'enregistrement et de calcul qui permettent l'exploitation des informations saisies. Ils forment en outre seuil de filtrage pour les bruits de fond. On notera que, suivant leur capacité numérique, ces convertisseurs peuvent s'étendre du binaire, en oui ou non, à des signaux à haute définition.

Pour faciliter l'exploitation des résultats d'auscultation en voie on enregistrera, conjointement avec les paires de signaux représentatifs, des signaux correspondant à des particularités locales de la voie. Dans ces signaux qui correspondent à des particularités de la voie, il est clair que l'on inclura les résultats d'auscultation par ultrasons ; mais on inclura aussi des signaux en correspondance avec des particularités topographiques, cantons de signalisation, bornes de distance. Un des buts de l'exploitation est de réduire au minimum les recherches des équipes de réparation pour identifier les rails défectueux de la voie.

Les caractéristiques et avantages de l'invention ressortiront d'ailleurs de la description qui va suivre, à titre d'exemple, en référence aux dessins annexés dans lesquels :

la figure 1 est un schéma de principe d'un dispositif selon l'invention ;

la figure 2 est une vue, en coupe transversale, du guidage de chariot capteur ;

la figure 3 est une vue latérale d'un ensemble de chariot capteur ;

la figure 4 est un schéma d'un pont de mesure par courants de Foucault, avec une bobine principale ;

la figure 5 est un schéma d'un pont de mesure par courants de Foucault, avec des bobines différentielles et une alimentation bifréquence.

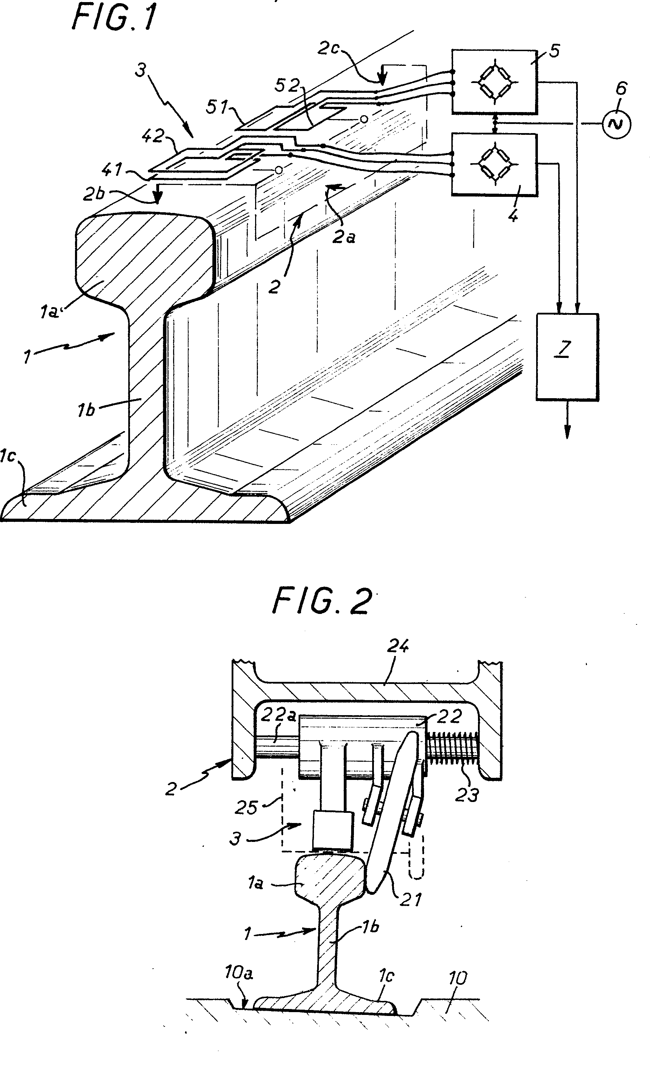

Selon la forme de réalisation choisie et représentée figure 1, le long de la face supérieure d'un rail 1 dans son ensemble, défile un chariot capteur 2, schématisé par un cadre en traits interrompus avec des flèches représentant des touches de guidage, 2a latérale, et 2b et 2c verticales. Le rail est constitué d'un champignon 1a, sur lequel portent les jantes des roues des véhicules de chemin de fer, une âme 1b étendue dans l'ensemble verticalement, et un patin 1c, qui prend appui sur les traverses.

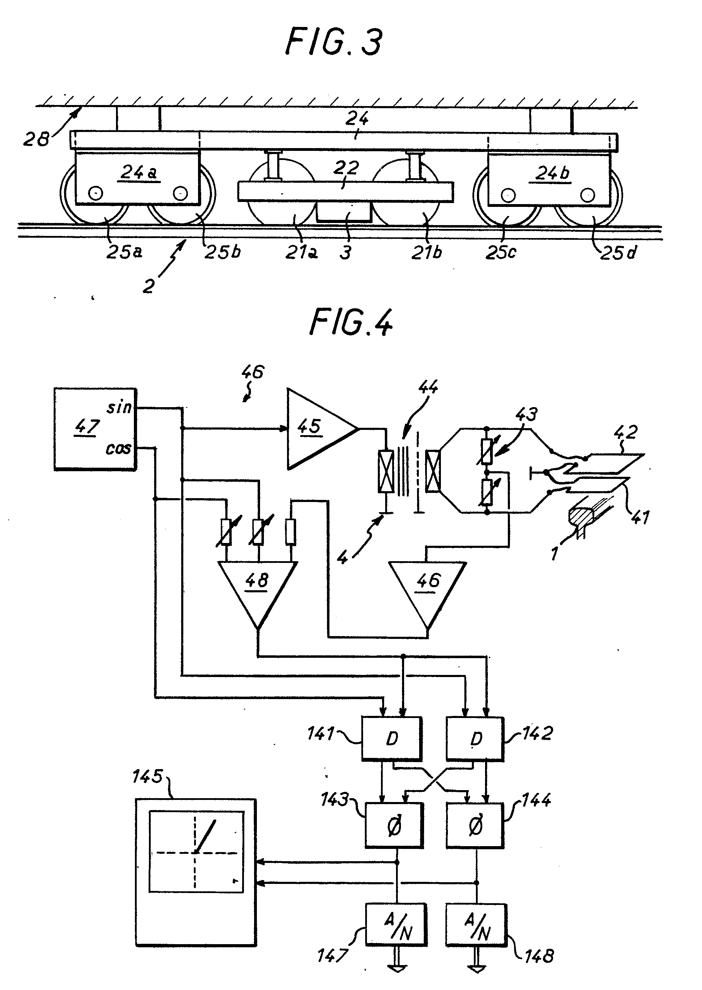

Pour l'auscultation par courants de Foucault, le chariot capteur 2, dont on décrira plus en détail un exemple de réalisation en référence aux figures 2 et 3, porte un capteur 3 dans son ensemble, avec, superposées, une bobine principale 41 et une bobine de compensation 42, et distantes longitudinalement de celles-ci, des bobines différentielles 51 et 52, accolées transversalement.

Les bobines principale 41 et de compensation 42 sont parallèles à la surface moyenne du champignon 1a, de forme rectangulaire et étendues transversalement sur sensiblement la largeur utile du champignon. Typiquement les bobines principale et de compensation ont une longueur de 28 mm, une largeur (selon la longueur du rail) de 4 mm, une hauteur de 2 mm, et comportent 150 spires ; la distance qui les sépare verticalement est de l'ordre de 0,5 mm. Par ailleurs la bobine principale 41 est maintenue par le guidage 2 à environ 2 mm du champignon.

Les bobines différentielles 51 et 52 occupent ensemble pratiquement le même encombrement que chacune des bobines principale et de compensation 41 et 42. Typiquement elles présentent une longueur de 14 mm, une largeur de 4 mm et une hauteur de 2 mm, et comptent 180 spires. La distance d'axe en axe des paires de bobines 41 et 42 d'une part, 51 et 52 d'autre part, est d'environ 15 mm.

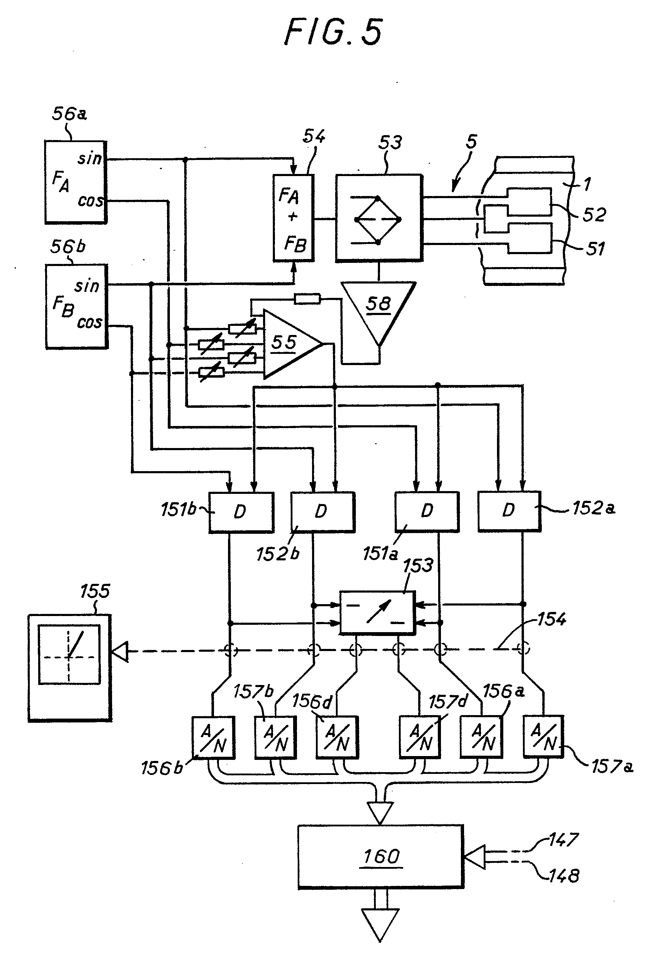

Comme on le décrira plus en détail en référence aux figures 4 et 5, les bobines 41 et 42 sont insérées dans deux branches adjacentes d'un pont de mesure d'impédance 4, tandis que les bobines 51 et 52 sont insérées dans deux branches adjacentes d'un pont de mesure d'impédance 5. Les deux ponts sont alimentés par une source de tension alternative 6, et les signaux de déséquilibre sont exploités dans une baie de mesure 7.

Comme on le voit aux figures 2 et 3, le chariot porte-capteur 2 dans son ensemble est tenu sous le plancher d'une voiture laboratoire 28 et comporte une poutre longitudinale 24 disposée sensiblement à l'aplomb du rail. La poutre 24 est susceptible d'être relevée vers la voiture 28 par un mécanisme non représenté lors des déplacements à grande vitesse pour rejoindre les zones de voies à contrôler, et, en position d'auscultation, est posée sur le rail 1 par l'intermédiaire de trains rouleurs 24a, 24b, équipés chacun de deux roues respectivement 25a, 25b et 25c, 25d ; ces roues présentent une jante cylindrique, et non tronconique comme les roues usuelles des véhicules ferroviaires, car elles ne participent pas au guidage latéral du chariot capteur, celui-ci étant assuré par les bogies de la voiture, et ne sont d'ailleurs pas couplées en essieux ; de plus les jantes cylindriques assurent la constance de distance verticale entre le bloc capteur 3 et le rail 1.

Le bloc capteur 3, comme on le voit mieux à la figure 2, est fixé à un coulisseau transversal 22, mobile sur un guide 22a tenu sous la poutre 24, et poussé vers l'extérieur de la voie par un ressort 23. Un galet 21, incliné sur la verticale et tenu par une chape sur le coulisseau 22, vient porter par son bord périphérique sur le flanc intérieur du champignon 1a, pour assurer le centrage latéral du bloc capteur 3 par rapport au champignon 1a du rail 1. On notera, à la figure 3, la présence de deux galets 21a et 21b encadrant le bloc capteur 3, celui-ci étant relativement développé en longueur pour contenir d'autres capteurs, notamment les capteurs ultrasoniques en plus des bobines 41, 42, 51 et 52 de l'auscultation par courants de Foucault.

Incidemment on remarquera, à la figure 2, la forme de la traverse 10, avec le logement 10a en pente vers l'intérieur de la voie pour le patin 1c du rail 1, cette disposition permettant notamment de réduire le couple de renversement du rail 1 résultant du poids qui charge les essieux à jantes coniques.

La figure 4 représente une disposition d'un pont d'impédance désigné par 4 dans son ensemble sur la figure 1. Le pont proprement dit comporte une bobine principale 41 et une bobine de compensation 42, superposée au-dessus du rail 1 ; ces bobines ont un point commun branché à la masse du pont et constituent ainsi deux branches adjacentes. Les deux autres branches du pont sont constituées par une paire d'impédances réglables 43 (par ajustage du point milieu). Le pont est alimenté sur une diagonale par un transformateur 44 à écran électrostatique, classique en soi, la diagonale d'alimentation étant située entre les sommets qui relient respectivement les extrémités libres des bobines 41 et 42 aux extrémités de la paire d'impédances 43. La diagonale de mesure est située entre la masse, point commun des bobines 41 et 42, et le point milieu ajustable de la paire d'impédances 43. On aura compris que, de façon classique, le réglage des impédances pour l'équilibre du pont comporte un réglage de résistance et un réglage de réactance.

L'alimentation du pont est obtenue à partir d'un synthétiseur de fréquence 47, présentant deux sorties en quadrature, dites sorties sinus et cosinus. La sortie sinus du synthétiseur 47 est amplifiée par l'amplificateur séparateur 45 pour être appliquée au primaire du transformateur 44.

Le signal de déséquilibre du pont, qui apparaît entre la masse et le point milieu de la paire d'impédances 43, est appliqué à l'entrée de l'amplificateur 46. La compensation du signal de déséquilibre amplifié, originellement non significatif, est ajustée par l'additionneur 48 qui reçoit en entrée, en outre, des signaux sinus et cosinus délivrés par le synthétiseur 47, et réglés en amplitude.

Après compensation le signal de mesure est appliqué à l'entrée de deux détecteurs synchrones 141 et 142 pilotés respectivement par les sorties cosinus et sinus du synthétiseur 47. Les sorties des détecteurs synchrones 141 et 142 sont appliquées à deux circuits correcteurs de phase 143 et 144 pour élaborer des composantes en quadrature du signal de déséquilibre appropriées. On comprendra que ces correcteurs de phase permettent, d'une part, de compenser les rotations de phase inévitables dans le transformateur 44 et le pont 41, 42, 43 ainsi que dans la détection synchrone, et d'autre part, d'ajuster l'origine des phases pour optimiser la discrimination des irrégularités. Cela correspond, d'ailleurs, à la mise au point normale de circuits de mesure.

Les composantes en phase et en quadrature du signal de déséquilibre en référence à l'origine de phase choisie sont appliquées respectivement aux entrées X et Y d'un afficheur analogique 145 où apparaît le signal de déséquilibre représenté vectoriellement dans le plan complexe. En outre ces composantes, dites X et Y, sont appliquées à des convertisseurs analogiques/numériques 147 et 148, qui élaborent des signaux numériques aptes au traitement par ordinateur.

On remarquera que, pour l'essentiel, les circuits de la figure 4 font partie de l'état de la technique antérieure. Toutefois, l'expérimentation de ces circuits a fait apparaître, d'abord, l'intérêt de la séparation des composantes X et Y du signal de déséquilibre et, en conséquence, des dispositions de circuit qui permettaient d'obtenir ce résultat. D'autre part, cette expérimentation a fait apparaître la nécessité d'améliorer la caractérisation des irrégularités pour procéder à une auscultation à une vitesse en rapport avec celle qu'autorisaient les améliorations, et de l'auscultation par ultrasons, et des dispositions de la voiture laboratoire.

Le pont 5 représenté, avec ses circuits auxiliaires, à la figure 5, est prévu pour incorporer, dans deux branches adjacentes, des bobines différentielles 51 et 52 disposées symétriquement de part et d'autre du plan de symétrie vertical du rail 1. Le pont comporte, représentés par le bloc 53, une paire d'impédances à point milieu ajustable, un transformateur d'alimentation et un amplificateur séparateur tout à fait analogues à ceux du pont 4 (figure 4). Cependant l'alimentation du pont 5 est obtenue à partir de deux synthétiseurs de fréquence 56a et 56b, comportant chacun des sorties sinus et cosinus. Les fréquences engendrées par les synthétiseurs 56a et 56b sont en rapport irrationnel pour réduire les risques d'interférences d'harmoniques. Les deux sorties sinus des synthétiseurs 56a et 56b attaquent conjointement un mélangeur 54, afin que le pont 53 soit alimenté par la superposition linéaire de deux signaux à fréquences distinctes. Le signal composite de mesure est amplifié par l'amplificateur 58, puis équilibré dans l'additionneur 55 qui reçoit en entrée les signaux sinus et cosinus délivrés par les deux synthétiseurs 56a et 56b, réglés convenablement en amplitude. Le signal de sortie de l'additionneur 55 est appliqué à deux groupes de deux détecteurs synchrones, 151a, 152a et 151b, 152b, chaque groupe étant affecté à une fréquence, respectivement fréquence délivrée par le synthétiseur 56a et le synthétiseur 56b, les détecteurs 151 étant pilotés par le signal cosinus et les détecteurs 152 par le signal sinus. On comprendra qu'à chaque détecteur est associé un correcteur de phase, non représenté mais analogue aux correcteurs de phase 143 et 144 de la figure 4. On a donc, en sortie des détecteurs synchrones 151a, 152a, 151b, 152b les composantes en phase ou X et quadrature ou Y du signal d'écart aux deux fréquences.

Ces composantes sont appliquées à un circuit combinateur 153, qui élabore une composante X et une composante Y différentielles. Des fractions dosées des composantes X sont appliquées aux deux entrées d'un premier amplificateur différentiel ; également des fractions des composantes Y sont appliquées aux deux entrées d'un second amplificateur différentiel ; et les composantes différentielles X et Y sont recueillies respectivement sur les sorties des premier et second amplificateurs différentiels. Le réglage du circuit combinateur 153, par dosage des composantes X ou Y du signal d'écart aux fréquences respectives des synthétiseurs 56a et 56b sera exécuté sur un appareil de voie à structure asymétrique déterminé ; à la suite de ce réglage, les composantes X et Y différentielles seront sensiblement nulles lorsque les capteurs ausculteront un tel appareil de voie en raison de la similitude de structure et de matériau constitutif des appareils de voie.

Un commutateur 154 permet d'appliquer une paire de composantes (X et Y) aux entrées X et Y d'un afficheur analogique 155, la paire de composantes se rapportant soit à la fréquence du synthétiseur 56a, soit à celle du synthétiseur 56b, ou encore étant la paire de composantes différentielles.

En outre les différentes composantes sont appliquées à des convertisseurs analogiques 156a, 157a, 156b, 157b, 156d, 157d, les différents signaux numériques étant dirigés sur des circuits d'exploitation 160, conjointement aux signaux issus des convertisseurs 147 et 148 de la figure 4.

Dans la pratique, le synthétiseur 56a se confondra avec le synthétiseur 47 de la figure 4. En outre les afficheurs 155 et 145 des figures 5 et 4 pourront être confondus, le commuta-

14

teur 154 étant alors prévu pour sélectionner également les composantes en sortie des correcteurs de phase 143 et 144.

On précisera que les informations issues du pont 5 à bobines différentielles pourront fréquemment, être numérisées en binaire strict, les convertisseurs analogiques 156a, 157a, 156b, 157b, 156d, 157d se réduisant alors à des détecteurs de seuils. Mais, en variante, la numérisation binaire pourra s'exécuter en aval des convertisseurs analogiques/numériques, par comparaison des signaux numériques à un nombre seuil.

On ne s'étendra pas sur le traitement des signaux numériques, qu'il soit exécuté en "temps réel" par comparaison avec des signaux types de défauts ou de discontinuités, gardés en mémoire, ou qu'il soit exécuté à partir d'un enregistrement représentatif des circonstances d'auscultation, avec des repères temporels, et des repères de position sur la voie. En outre le traitement des signaux numériques obtenus à l'aide des dispositifs qui ont été décrits ici vient en complément de données obtenues parallèlement par auscultation aux ultrasons, ainsi d'ailleurs que des données résultant d'une surveillance de la voie par caméras de télévision.

Bien entendu tous les dispositifs d'auscultation sont en double, afin d'ausculter simultanément les deux rails d'une voie. Les Demanderesses ont équipé une voiture, capable d'être tractée à des vitesses classiques de convois (jusqu'à 140 km/h), et d'effectuer des mesures à des vitesses de 40 à 50 km/h. Notamment il est prévu deux chariots capteurs ; les guidages latéraux des capteurs sont couplés en laissant un jeu réduit, afin que, aux interruptions de continuité des faces latérales de champignons, telles qu'elles se trouvent aux traversées, le guidage latéral du capteur sur le champignon dont la face latérale présente une discontinuité, ne soit pas perdu, sans que toutefois le guidage autonome des chariots ne soit affecté par une légère variation d'écartement des rails (aux aiguilles notamment).

Il va de soi que l'invention n'est pas limitée aux exemples décrits, mais en embrasse toutes les variantes d'exécution.

0159933

## REVENDICATIONS

1. Dispositif pour le repérage de défauts de la surface de roulement de rails (1) de chemin de fer, ceux-ci présentant, en outre, des discontinuités de structure, dispositif comprenant, par rail (1), un chariot capteur (3) déplaçable le long de ce rail, équipé de moyens de guidage (21, 25) pour le maintenir en position relative constante par rapport à la surface de roulement lissée, et portant au moins une bobine (41, 42) inductivement couplée à la surface de roulement et insérée dans une branche d'un pont (4) d'impédance alimenté sur une première diagonale par une tension alternative (6) à fréquence choisie, et réglé à l'équilibre en sorte de délivrer sur la seconde diagonale, en réponse à une irrégularité du rail, un signal d'écart complexe dépendant des variations de couplage et de charge induites dans la bobine par l'irrégularité, et des moyens de détection (141, 142), branchés sur la seconde diagonale du pont et aptes à délivrer des paires de signaux représentatifs des variations précitées, afin de permettre de distinguer, par comparaison avec des valeurs typiques résultant d'irrégularités déterminées, dans ces irrégularités celles qui sont des défauts de celles qui sont des discontinuités de structure, dispositif caractérisé en ce qu'il comporte deux ponts d'impédance (4, 5), un premier pont (4) avec une bobine (41), qui sera dite ci-après bobine principale, centrée dans le plan vertical de symétrie du rail (1), et le second (5) avec une paire de bobines (51, 52), qui seront dites ci-après différentielles, insérées respectivement dans deux branches adjacentes du pont (5) disposées symétriquement de part et d'autre du plan de symétrie précité en couvrant ensemble la même surface de rail (1) que la bobine principale (41) et à distance de celle-ci faible mais suffisante pour que le couplage entre ponts (4 et 5) soit négligeable, les paires de signaux représentatifs issus des moyens de détection (141, 142, 151a, 152a, 151b, 152b) branchés sur l'un et l'autre ponts (4, 5) étant dirigés conjointement sur des moyens de traitement (160) aptes à les comparer à des valeurs enregistrées typiques d'irrégularités, soit défauts, soit discontinuités de structure.

2. Dispositif selon la revendication 1, caractérisé en ce qu'il comporte une bobine de compensation (42) insérée dans une branche du premier pont (4) adjacente à celle où est insérée la bobine principale (41) et disposée dans le chariot capteur (3) au-dessus de cette bobine principale (41).

3. Dispositif selon l'une des revendications 1 et 2, pour distinguer un défaut à caractère asymétrique d'une discontinuité de structure de type particulier présentant un caractère asymétrique analogue, caractérisé en ce que le second pont (5) est alimenté sur sa première diagonale par une somme (54) de deux tensions à fréquences (56$\underline{a}$, 56$\underline{b}$) distinctes, deux ensembles de moyens détecteurs (151$\underline{a}$, 152$\underline{a}$ ; 151$\underline{b}$, 152$\underline{b}$) sensibles respectivement à l'une et l'autre fréquences étant branchés dans la seconde diagonale.

4. Dispositif selon la revendication 3, caractérisé en ce que les paires de signaux représentatifs sont appliquées conjointement à des moyens différentiels (153) avec des amplitudes réglées en sorte que la paire de signaux représentatifs en sortie soit nulle pour une discontinuité de structure du type particulier précité.

5. Dispositif selon une quelconque des revendications 1 à 4, caractérisé en ce que la bobine principale (41) est rectangulaire, avec un grand côté perpendiculaire à la direction longitudinale du rail (1).

6. Dispositif selon une quelconque des revendications 1 à 5, caractérisé en ce que les chariots (3) correspondant aux deux rails de voie sont couplés mécaniquement.

7. Dispositif selon une quelconque des revendications 1 à 6, caractérisé en ce que lesdits moyens détecteurs (141, 142, 151$\underline{a}$, 152$\underline{a}$, 151$\underline{b}$, 152$\underline{b}$) comprennent des circuits de détection synchrones pilotés par des tensions à fréquence égale à la fréquence d'alimentation du pont (4, 5) et en cohérence de phase avec elles.

8. Dispositif selon la revendication 7, caractérisé en ce que chaque ensemble de moyens de détection synchrones (141, 142 ; 151$\underline{a}$, 152$\underline{a}$ ; 151$\underline{b}$, 152$\underline{b}$) comprend une paire de ces moyens, pilotés par des signaux en quadrature.

9. Dispositif selon une quelconque des revendications 1 à 8, caractérisé en ce que les moyens de traitement de signaux comportent, en entrée de chacun des signaux représentatifs, un convertisseur analogique/numérique (147, 148, 156a, 157a, 156b, 157b, 156d, 157d).

10. Dispositif selon la revendication 9, caractérisé en ce que certains des convertisseurs analogiques/numériques (156a, 157a, 156b, 157b, 156d, 157d) présentent une réponse en binaire strict pour tout ou rien.

11. Dispositif selon une quelconque des revendications 1 à 10, caractérisé en ce qu'il comporte au moins un dispositif d'affichage en coordonnées cartésiennes (145, 155) avec des entrées d'abscisse et d'ordonnée, les paires de signaux représentatifs étant appliquées, à travers un moyen de commutation (154) apte à sélectionner une paire de signaux aux entrées d'abscisse et d'ordonnée du moyen d'affichage (145, 155).

1/3. 0159933

FIG.1

FIG.2

# FIG.3

# FIG.4

3/3.                    0159933

FIG.5